# EUROPÄISCHE PATENTSCHRIFT

(11) **EP 1 211 582 B1**
(45) Veröffentlichungstag und Bekanntmachung des Hinweises auf die Patenterteilung: **21.05.2003**
(21) Anmeldenummer: 00126131.2
(22) Anmeldetag: 30.11.2000
(51) Int. Cl.: G05B 19/418

(54) **Anordnung zur Überwachung, Steuerung und Regelung einer betriebstechnischen Anlage eines Gebäudes**
Arrangement for the surveillance, control and regulation of a technical installation of a building automation system
Dispositif de surveillance, de commande et de régulation d'une installation technique de système d'automation de bâtiments

(43) Veröffentlichungstag der Anmeldung: 05.06.2002
(73) Patentinhaber: Siemens Building Technologies AG, 8008 Zürich (CH)
(72) Erfinder: Hammer, Jörg, CH-6331 Hünenberg (CH)
(74) Vertreter: Berg, Peter, Dipl.-Ing.

(56) Entgegenhaltungen:
- EP-A- 0 345 493
- US-A- 5 980 078
- US-A- 6 064 312

## Beschreibung

Die Erfindung bezieht sich auf ein Verfahren sowie eine Einrichtung gemäss den Oberbegriffen der Ansprüche 1 und 8.

Solche Einrichtungen eignen sich beispielsweise zur Überwachung, Steuerung und/oder Regelung von Prozessgrössen in komplexen technischen Systemen, wobei beispielhaft Heizungs-, Lüftungs- und Klimaanlagen, Zutritts- und Feuerüberwachungssysteme oder allgemein Gebäudeautomatisationsanlagen - die auch als Gebäudeleitsysteme bezeichnet werden - genannt seien, in welchen insbesondere auch Raumklimagrössen beeinflusst werden. In einer Gebäudeautomatisationsanlage sind in der Regel eine Vielzahl sogenannter Feldgeräte wie Sensoren und Stellglieder zu bedienen. Im weiteren wird in einer Gebäudeautomatisationsanlage für den Datenaustausch zwischen einzelnen Anlagenteilen vorwiegend ein Bussystem benutzt. Dazu einsetzbare Bussysteme und Technologien sind beispielsweise LON oder LonWorks® der Firma ECHELON, der Europäische Installationsbus EIB oder der nach deutscher Norm DIN 19245 definierte PROFIBUS. Grundsätzlich sind anstelle des Bussystems oder in Ergänzung dazu auch optische Datenkommunikationskanäle oder ein Funknetz einsetzbar, beispielsweise ein Glasfasemetz oder ein zellulares Telefonnetz, wie etwa GSM oder UMTS.

In EP 416 891 A2 wird eine Einrichtung vorgeschlagen, welche zur Bedienung von Feldgeräten Schnittstelleneinheiten verwendet, welche an einen gemeinsamen Datenbus gekoppelt sind. Eine Schnittstelleneinheit ist nun von einem vorbestimmten Typ und damit in der Lage genau einen gewissen Typ von Feldgerät, typischerweise Analog-Eingabe, Analog-Ausgabe, Digital-Eingabe oder Digital-Ausgabe zu bedienen.

Aus EP 352 683 B sind verschiedene Einrichtungen bekannt, durch welche der Typ eines mit einem Prozessor verbundenen Funktionsmoduls durch den Prozessor identifizierbar ist.

Aus EP 335 743 A2 ist eine Ausgangstreiberschaltung für eine Schnittstelleneinheit bekannt, welche Anschlusspunkte aufweist, die sowohl als Signalausgang wie auch als Signaleingang für Geräte einsetzbar sind.

Es ist auch ein Busgerät für den Anschluss an ein Bussystem der Gebäudeleittechnik bekannt (EP 841 775 A1), welches Mittel zur Speicherung einer Vielzahl von Einzelfunktionen und Mittel zur Anpassung der Einzelfunktionen für eine spezielle Anwendung aufweist.

Ausserdem ist aus EP 606 335 ein Steuerungssystem mit einem zentralen Empfänger bekannt, der mit einer Vielzahl von Steuergeräten verbunden ist. Prozessdaten sind durch Abtasteinheiten erfassbar, welche erfasste Daten vorzugsweise drahtlos dem zentralen Empfänger übermitteln.

Ferner werden in US 5 481 750 und US 5 519 878 Verfahren zur Adressvergabe in Kommunikationsnetzwerken vorgeschlagen.

Aus der Druckschrift US 5,980,078 ist die automatische Zuordnung einer Adresse an ein Feldgerät sowie die automatische Konfigurierung des Feldgerätes gemäß einer zuvor gespeicherten Funktionalität bekannt.

Bekannte Gebäudeleitsysteme haben den Nachteil, dass ihre Inbetriebnahme einen verhältnismässig grossen Aufwand darstellt, da insbesondere eine Vielzahl verschiedenartiger Schnittstelleneinheiten mit einer Vielzahl unterschiedlichen Einzelfunktionen einbezogen werden müssen.

Der Erfindung liegt die Aufgabe zugrunde, ein Verfahren zur selbsttätigen Inbetriebnahme und Einbindung von Feldgeräten eines Gebäudeleitsystems anzugeben, sowie eine Einrichtung zur Durchführung des Verfahrens zu schaffen.

Die genannte Aufgabe wird erfindungsgemäss durch die Merkmale der Anspruche 1 und 8 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: den prinzipiellen Aufbau einer Anordnung zur Überwachung, Steuerung und/oder Regelung einer betriebstechnischen Anlage eines Gebäudes,
- Fig. 2: den prinzipiellen Aufbau von Ein-/Ausgabemodulen zur Bedienung von Feldgeräten, insbesondere im Hinblick auf wesentliche Speicherbereiche,
- Fig. 3: den prinzipiellen Aufbau eines Ein-/Ausgabemoduls, insbesondere im Hinblick auf wesentliche Funktionsblöcke,
- Fig. 4: ein an eine Klemme des Ein-/Ausgabemoduls angeschlossenes Feldgerät, und
- Fig. 5: eine weitere Darstellung zur Funktionalität des Ein-/Ausgabemoduls.

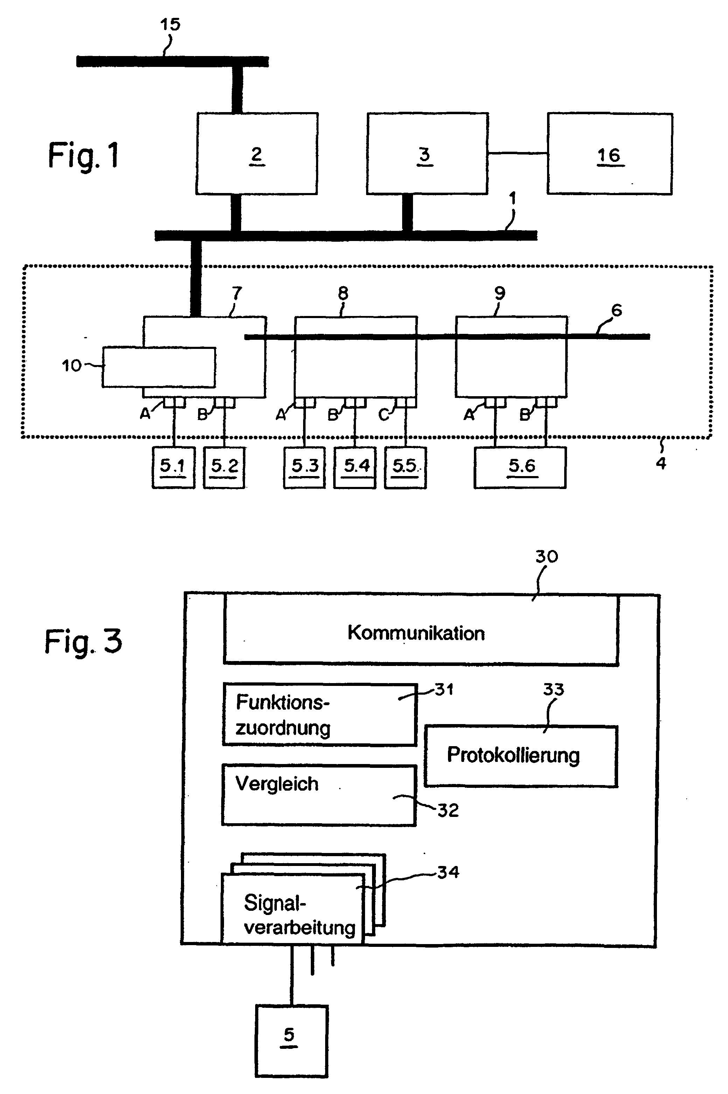

In der Fig. 1 bedeutet 1 ein Kommunikationsmedium zur Verbindung von Einheiten 2, 3 und 4 einer Anordnung zur Überwachung, Steuerung und/oder Regelung einer betriebstechnischen Anlage eines Gebäudes.

Beispielhaft sind eine erste Einheiten 2 und eine zweite Einheit 3 je ein Regelund/oder Steuergerät. Eine dritte Einheit 4 ist eine Ein-/Ausgabe-Einheit zur Bedienung von Feldgeräten 5.

Im Allgemeinen ist die Ein-/Ausgabe-Einheit 4 in mehrere Ein-/Ausgabemodule aufgeteilt, die mit Vorteil über ein Bussystem 6 miteinander verbunden sind. In der Zeichnung ist ein erstes Exemplar des Ein-/Ausgabemoduls mit 7, ein zweites Exemplar mit 8 und ein drittes Exemplar mit 9 bezeichnet. Die Anzahl der über das Bussystem miteinander verbundenen Exemplare 7, 8 oder 9 des Ein-/Ausgabemoduls ist nicht wie in Fig. 1 dargestellt auf lediglich drei beschränkt.

Innerhalb der Ein-/Ausgabe-Einheit 4 verfügt mit Vorteil das erste Exemplar 7 gegenüber den andern Exemplaren 8 und 9 der Ein-/Ausgabemodule über eine erweiterte Funktionalität, indem das Ein-/Ausgabemodul 7 einen Datenaustausch zwischen dem übergeordneten Kommunikationsmedium 1 und dem Bussystem 6 der Ein-/Ausgabe-Einheit 4 ermöglicht, wobei bei Bedarf verschiedenartige Signalträger und verschiedenartige Datenübertragungsprotokolle aufeinander abgestimmt werden. Durch die erweiterte Funktionalität dient das erste Exemplar 7 innerhalb der Ein-/Ausgabe-Einheit 4 als Basismodul, wobei das zweite Exemplar 8 und das dritte Exemplar 9 innerhalb der Ein-/Ausgabe-Einheit 4 jeweils als Erweiterungsmodul arbeiten.

Mit Vorteil weist das erste Exemplar 7 des Ein-/Ausgabemoduls Bedienungsmittel 10 für ein Benutzerschnittstelle auf. In einer Variante des Ein-/Ausgabemoduls 7 umfasst das Bedienungsmittel 10 auch einen Anschluss für ein Bildschirmterminal oder einen mobilen Computer.

Bei Bedarf weist das Bussystem 6 auch Mittel zur Speisung der Exemplare 7, 8 und 9 des Ein-/Ausgabemoduls, und/oder Mittel zur Speisung der angeschlossenen Feldgeräte 5 auf. In einer vorteilhaften Implementierung der Ein-/Ausgabe-Einheit 4 weist das als Basismodul wirkende erste Exemplar 7 des Ein-/Ausgabemoduls ein Speisegerät zur Energieversorgung über das Bussystem 6 auf.

In einer Variante der Anordnung ist die erste Einheit 2 über ein weiteres Kommunikationsmedium 15 mit einem ihm übergeordneten System - beispielsweise mit einer in der Zeichnung nicht dargestellten Zentrale - verbunden. Bei Bedarf ist die zweite Einheit 3 mit einem Bildschirmterminal oder einen mobilen Computer 16 verbunden.

Mit Vorteil weist das Ein-/Ausgabemodul 7, 8 oder 9 jeweils mehrere Anschlussstellen A, B und C für Feldgeräte 5 auf. Grundsätzlich ist die Anzahl der implementierten Anschlussstellen pro Ein-/Ausgabemodul 7, 8 oder 9 in weiten Grenzen wählbar und auf zulässige Modulkosten, Platzbedarf und auf den zu erwartenden Datenstrom pro Zeiteinheit abzustimmen. Für Gebäudeautomatisationsanlagen werden mit Vorteil acht oder sechzehn Anschlussstellen pro Ein-/Ausgabemodul 7, 8 oder 9 verwirklicht.

Die Anschlussstellen A, B und C sind grundsätzlich identisch aufgebaut und universal als Eingabeport und als Ausgabeport einsetzbar also bidirektional und zwar für analoge Signale und digitale Signale. Mit Vorteil weist die Anschlussstelle A, B oder C je drei Anschlusspunkte für das Feldgerät 5 auf. Die universelle Anschlussstelle A, B oder C ist also für eine Vielzahl von Feldgerättypen einsetzbar und zwar für Sensoren oder Aktuatoren, also für Feldgeräte mit Analog-Eingabe, Analog-Ausgabe, Digital-Eingabe oder Digital-Ausgabe, jeweils mit oder ohne Speisung über die Anschlussstelle A, B oder C.

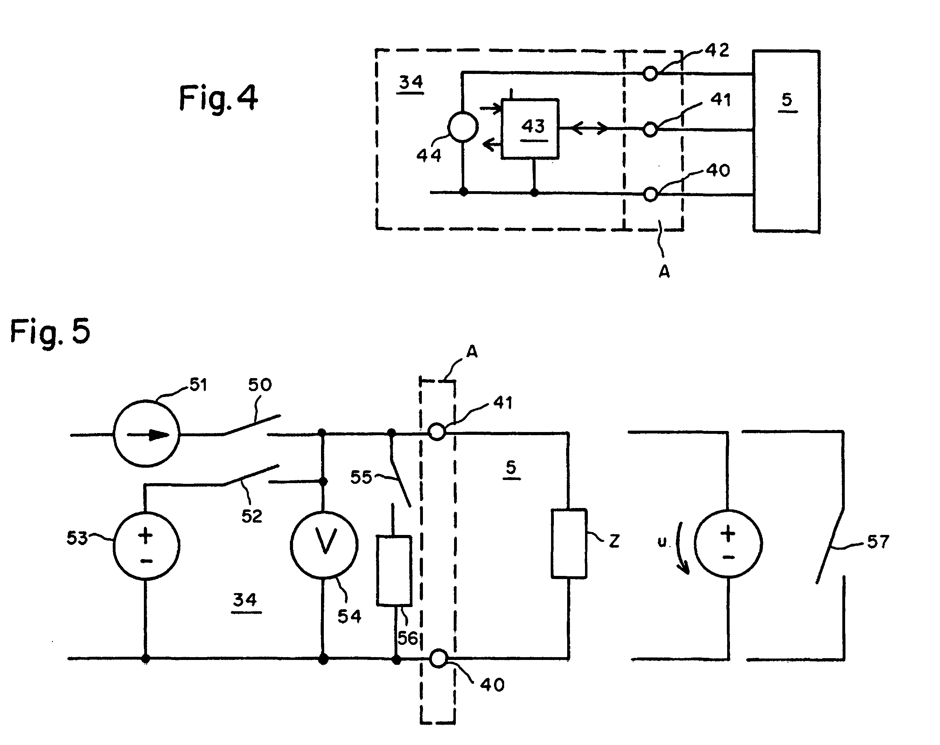

Je nach Feldgerätetyp ist das Feldgerät 5 also zweiadrig oder dreiadrig mit der Anschlussstelle A, B oder C verbunden (Fig. 5). Bei Bedarf ist das Feldgerät 5 mit mehreren Anschlussstellen verbunden, nämlich beispielsweise dann, wenn das Feldgerät 5 ein Stellglied mit Positionsrückmeldung ist, wobei dann das Stellsignal mit Vorteil an einer ersten Anschlussstelle A ausgegeben und an einer zweiten Anschlussstelle gleichzeitig ein Zustand oder die aktuelle Position des Stellglieds eingelesen wird.

Das Feldgerät 5 ist typischerweise ein Sensor zur Erfassung einer Prozessgrösse oder ein Stellantrieb zur Beeinflussung einer Prozessgrösse.

Beispielhaft an Anschlussstellen A, B oder C eines Exemplars 7, 8 oder 9 des Ein-/Ausgabemoduls angeschlossen sind: ein Temperaturfühler 5.1, ein Feuchtefühler 5.2, ein Stellantrieb 5.3 für eine Lüftungsklappe, ein Gas-Sensor 5.4, ein Schalter 5.5 und ein Stellglied 5.6 mit Positionsrückmeldung, welches die Anschlussstellen A und B des Ein-/Ausgabemoduls 9 benötigt.

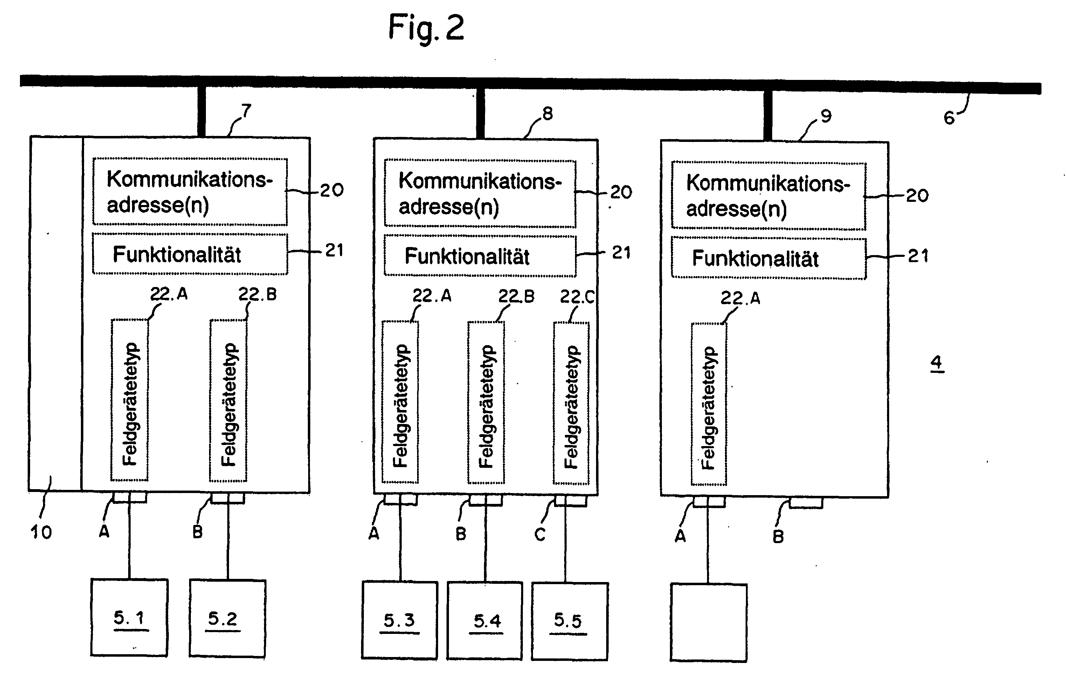

Zum Zweck einer tiefer gehenden Beschreibung sind wesentliche Strukturelemente des Exemplars 7, 8 oder 9 des Ein-/Ausgabemoduls in der Fig. 2 dargestellt.

Das Exemplar 7, 8 oder 9 des Ein-/Ausgabemoduls weist einstellbare Kommunikationsadressen 20 und einen Speicherbereich 21 zur Speicherung der konfigurierbaren Funktionalität des entsprechenden Exemplars 7, 8 oder 9 des Ein-/Ausgabemoduls. Mit Vorteil weist jedes der Exemplare 7, 8 und 9 des Ein-/Ausgabemoduls für jede seiner Anschlussstellen A, B und C eine Variable 22.A oder 22.B oder 22.C zur Speicherung des konfigurierbaren Feldgerätetyps auf, welcher dem der Anschlussstelle A, B oder C zugeordneten Feldgerät 5 entspricht.

Mit Vorteil liegen die Kommunikationsadressen 20, der Speicherbereich 21 und die Variablen 22.A, 22.B und 22.C in einem nichtflüchtigen Speichermodul, also beispielsweise in einem sogenannten "Nonvolatile Random Access Memory NVRAM".

Unter dem Gesichtspunkt einer vorteilhaften Adressierungsmethode entspricht der Anschluss A, B oder C je einem Datenpunkt, an den Datensignale ausgegeben, oder von dem Datensignale gelesen werden. Mit Vorteil sind mehrere, logisch zusammengehörende Datenpunkte durch Software der Ein-/Ausgabe-Einheit 4 und auch durch Software des Regel- und/oder Steuergeräts 2 oder 3 (Fig. 1) zu einem Ein-/Ausgabeobjekt zusammenfassbar, wobei in einem Spezialfall ein gewisses Ein-/Ausgabeobjekt einem einzigen Datenpunkt zugeordnet ist.

Mit Vorteil weisen die Kommunikationsadressen 20 für jedes Ein-/Ausgabeobjekt des Exemplars 7, 8 oder 9 eine physikalische Adresse auf, welcher vorteilhafterweise auch eine logische Adresse zugeordnet ist. In einer vorteilhaften Implementierung weist die physikalische Adresse eine erste, dem Basismodul zugeordnete Komponente KB, eine zweite, dem Erweiterungsmodul zugeordnete Komponente KE und eine dritte, dem Eingabe-/Ausgabeobjekt zugeordnete Komponente KO auf. Ein Ein-/Ausgabeobjekt verfügt demnach mit Vorteil über eine in der Ein-/Ausgabe-Einheit 4 eindeutige physikalische Adresse "KB.KE.KO". In einer Variante der vorteilhaften Adressierungsmethode fällt die Komponente KE für das Erweiterungsmodul dann weg, wenn das Ein-/Ausgabeobjekt dem Basismodul zugeordnet ist. Wenigstens die beiden Komponenten KE und KO werden in einer vorteilhaften Implementierung der Ein-/Ausgabe-Einheit 4 durch die entsprechenden Exemplare 7, 8 oder 9 des Ein-/Ausgabemoduts selbsttätig zugeordnet, wobei die Komponente KE beispielhaft durch die physikalische Position - Reihenfolge - des Exemplars 7, 8 oder 9 festgelegt wird. Die selbsttätige Zuordnung der Kommunikationsadressen 20 oder der beiden Komponenten KE und KO erfolgt mit Vorteil während der Inbetriebnahme der Ein-/Ausgabe-Einheit.

Im Speicherbereich 21 wird - insbesondere in einer Phase der Inbetriebnahme der Ein-/Ausgabe-Einheit 4 - die von den am Exemplar 7, 8 oder 9 anzuschliessenden bzw. angeschlossenen Feldgeräten 5 abhängige Funktionalität des Exemplars 7, 8 oder 9 abgespeichert. Durch die abgespeicherte Funktionalität wird die Arbeitsweise des Exemplars 7, 8 oder 9 wesentlich mitbestimmt.

In der Variable 22.A oder 22.B oder 22.C wird - mit Vorteil in einer Phase der Inbetriebnahme der Ein-/Ausgabe-Einheit 4 - der von dem an der Anschlussstelle A, B oder C des Exemplars 7, 8 oder 9 anzuschliessenden bzw. angeschlossenen Feldgerät 5 abhängige Feldgerätetyp abgespeichert. Auch durch den abgespeicherten Feldgerätetyp ist die auf die Anschlussstelle A, B oder C bezogene Arbeitsweise des Exemplars 7, 8 oder 9 wesentlich mitbestimmt.

Eine Klasse bzw. ein Wertebereich für den Feldgerätetyp ist von der erwarteten Vielfalt an zulässigen Feldgeräten 5 abhängig. Beispielhaft umfasst die genannte Klasse wenigstens die Werte "Sensor mit elektrischer Signalquelle (aktiver Sensor)", "Sensor ohne elektrische Signalquelle (passiver Sensor)", "Stellglied mit Rückmeldung" und "Stellglied ohne Rückmeldung". Mit Vorteil sind mit dem Feldgerätetyp auch Wertebereich und Charakter festgelegt. z.B. digitale oder analoge Signale.

Zum Zweck einer tiefer gehenden Beschreibung des Funktionsprinzips sind wesentliche Funktionsblöcke des Exemplars 7, 8 oder 9 des Ein-/Ausgabemoduls in der Fig. 3 dargestellt.

Durch einen ersten Funktionsblock 30 wird die Kommunikation über das Bussystem 6 (Fig. 2) gewährleistet. Bei dem als Basismodul eingesetzten ersten Exemplar 7 des Ein-/Ausgabemoduls übernimmt der erste Funktionsblock 30 mit Vorteil auch die Kommunikation zwischen dem Bussystem 6 und dem Kommunikationsmedium 1 (Fig. 1). Ein zweiter Funktionsblock 31 ordnet in einer Konfigurierungsphase dem Ein-/Ausgabemodul die vorgesehene Funktionalität zu und gewährleistet diese in einer Betriebsphase.

Ein dritter Funktionsblock 32 vergleicht die in der Konfigurierungsphase im Ein-/Ausgabemodul abgespeicherten Daten mit Messdaten, wobei die Messdaten durch das Ein-/Ausgabemodul durch Messungen am angeschlossenen Feldgerät 5 selbsttätig ermittelt werden.

Ein vierter Funktionsblock 33 generiert ein Zustandsprotokoll, einerseits über wesentliche Parameter oder Zustände des Ein-/Ausgabemoduls und andrerseits über wesentliche Parameter oder Zustände des angeschlossenen Feldgeräts 5. Der vierte Funktionsblock 33 protokolliert mit Vorteil auch allfällig vom dritten Funktionsblock 32 festgestellte Verdrahtungsfehler betreffend den Anschlussstellen A, B und C (Fig. 2).

Das Zustandsprotokoll wird bei der Inbetriebnahme erstellt und enthält vorteilhafterweise eine Aussage über die Parameter und die Funktionalität des Ein-/Ausgabemoduls nach der Konfigurierungsphase und eine weitere Aussage über Betriebsbereitschaft beziehungsweise den Zustand nach einer Testphase, die anschliessend an die Konfigurierungsphase durchgeführt wird, und nach der - sofern sie erfolgreich verlaufen ist - das angeschlossene Feldgerät 5 vollständig in der Ein-/Ausgabe-Einheit eingebunden ist.

Mit Vorteil wird das Protokoll an einen mobilen Computer über die Bedienungsmittel 10 oder das Terminal 16 (Fig. 1) ausgegeben.

Ein fünfter Funktionsblock 34 dient der Aufbereitung und Verarbeitung von Signalen von und zur Anschlussstelle A, B oder C (Fig. 2) des Feldgeräts 5.

Der Funktionsblock 30, 31, 32, 33 oder 34 kann als elektronische Schaltung oder wenigstens teilweise auch softwaremässig als Prozess, Programmstück oder Routine verwirklicht werden, wobei der Funktionsblock bei einer softwaremässigen Ausführung auch die Zielhardware umfasst.

Mit Vorteil wird mindestens ein Teil der Funktionsblöcke 30, 31, 32, 33 oder 34 als sogenannter "Application-Specific Integrated Circuit ASIC" implementiert.

In der Fig. 4 ist ein Teil des der Aufbereitung und Verarbeitung von Signalen dienenden fünften Funktionsblocks 34 dargestellt, welcher mit der Anschlussstelle A verbunden ist. Die Anschlussstelle A - oder B oder C - weist wenigstens zwei Anschlussklemmen 40, 41 und 42 für das Feldgerät 5 auf: eine erste Anschlussklemme 40 für ein Bezugspotential, eine mit einer Schnittstellenschaltung 43 verbundene zweite Anschlussklemme 41 und bei Bedarf eine mit einer Quelle 44 verbundene dritte Anschlussklemme 42. Die Schnittstellenschaltung 43 ist derart ausgebildet, dass sowohl ein Ausgangssignal für das Feldgerät 5 geliefert, wie auch ein vom Feldgerät 5 geliefertes Eingangssignal entgegengenommen werden kann. Über die Quelle 44 ist bei Bedarf das Feldgerät 5 speisbar, wobei die Quelle 44 mit Vorteil je nach Anforderung des Feldgeräts 5 eine konstante Spannung oder einen konstanten Strom zur Speisung des Feldgeräts 5 liefern kann.

Besonders gering wird der Aufwand zum Anschliessen der Feldgeräte 5 an die Ein-/Ausgabe-Einheit 4 dann, wenn die Anschlussklemmen 40, 41 und 42 durch zuverlässige Federklemmen implementiert sind.

In einer vorteilhaften Ausführung des Exemplars 7, 8 oder 9 des Ein-/Ausgabemoduls ist die Quelle 44 ihrerseits über das Bussystem 6 gespeist.

Zur Identifizierung oder zur Verifizierung des Feldgerätetyps eines am Ein-/Ausgabemodul 7, 8 oder 9 angeschlossenen Feldgeräts 5 weist das Ein-/Ausgabemodul 7, 8 oder 9 Mittel zum Ausmessen des Feldgeräts 5 auf, welche mit Vorteil im fünften Funktionsblock 34 implementiert sind. Zur Identifizierung oder zur Verifizierung des Feldgerätetyps werden jeweils zwei der Anschlussklemmen 40, 41, 42 der Anschlussstelle A, B oder C gemäss dem in Fig. 5 dargestellten Prinzip beschaltet, wobei vorteilhafterweise verschiedene Kombinationen von jeweils zwei der drei Anschlussklemmen 40, 41 und 42 untersucht werden. Beispielhaft sind durch eine in der Fig. 5 nicht dargestellte Ablaufsteuerung über einen ersten Schalter 50 eine Stromquelle 51 oder über einen zweiten Schalter 52 eine Spannungsquelle 53 an das Feldgerät 5 anschliessbar, wobei über eine Messeinrichtung 54 die elektrische Spannung zwischen den beiden aktuell kombinierten Anschlussklemmen 40, 41 erfassbar ist. Für eine weitere Messung sind die beiden aktuell kombinierten Anschlussklemmen 40, 41 über einen dritten Schalter 55 mit einer bekannten Impedanz 56 belastbar, wobei über die Messeinrichtung 54 die elektrische Spannung zwischen den beiden aktuell kombinierten Anschlussklemmen 40, 41 erfassbar ist. Als Grundlage für die Identifizierung oder die Verifizierung des Feldgerätetyps des aktuell angeschlossenen Feldgeräts 5 kann eine zwischen den beiden aktuell kombinierten Anschlussklemmen 40, 41 wirkende Impedanz Z oder ein vom Feldgerät 5 zwischen den beiden aktuell kombinierten Anschlussklemmen 40, 41 generiertes oder bestimmtes Signal u erfasst und ausgewertet werden. Es versteht sich allerdings von selbst, dass ein Unterbruch der Anschlussleitung von einem offenen Schalter 57 oder auch ein Kurzschluss von einem geschlossenen Schalter nicht unterscheidbar sind.

In der Konfigurierungsphase für die Ein-/Ausgabe-Einheit 4, werden die vorgesehene Funktionalität des Ein-/Ausgabemoduls 7, 8 oder 9 und die Feldgerättypen der für das Ein-/Ausgabemodul 7, 8 oder 9 vorgesehenen Feldgeräte 5 (Fig. 2) eingestellt, wobei die notwendige Information mit Vorteil über die Bedienungsmittel 10 (Fig. 1) in der Ein-/Ausgabe-Einheit 4 abgespeichert werden, wobei dazu am Bedienungsmittel 10 bei Bedarf ein mobiler Computer anschliessbar ist. In einer Variante kann die Information wenigstens teilweise auch über das Kommunikationsmedium 1 in die Ein-/Ausgabe-Einheit 4 geladen werden, wobei beispielhaft der mobile Computer 16 benutzt wird.

Die Festlegung einer Komponente der Kommunikationsadressen 20 erfolgt bei der Inbetriebnahme bei Bedarf bereits in der Konfigurierungsphase.

Die Inbetriebnahme beginnt also mit einer Konfigurierungsphase, in der die nach der Planung der Anlage definierten Parameter und die Funktionalität der Ein-/Ausgabe-Einheit 4 in der Ein-/Ausgabe-Einheit 4 abgespeichert werden. Die Inbetriebnahme wird mit der erfolgreichen Testphase abgeschlossen, in der die angeschlossenen Feldgeräte 5 selbsttätig elektrisch ausgemessen und die gewonnene Daten mit den konfigurierten Daten verglichen werden.

Gewisse Feldgerätetypen - beispielsweise Widerstandsfühler - sind in der Testphase praktisch mit hundertprozentiger Sicherheit verifizierbar.

Nach der Testphase liegt ein Testprotokoll vor, welches über den Erfolg der Inbetriebnahme Auskunft gibt. Nach einer erfolgreichen Inbetriebnahme sind die Feldgeräte 5 vollständig in die Ein-/Ausgabe-Einheit 4 eingebunden.

Ein vorteilhaftes Verfahren zur Inbetriebnahme der Ein-/Ausgabe-Einheit 4 und damit der Einrichtung zur Steuerung und/oder Regelung von Prozessgrössen mittels der Feldgeräte 4 weist wenigstens folgende Verfahrensschritte auf: Einen ersten Schritt, in welchem dem Ein-/Ausgabemodul 7, 8 oder 9 eine Adresse oder ein Adressbereich zugeordnet wird. Einen zweiten Schritt, in welchem die Funktionalität des Ein-/Ausgabemoduls 7, 8 oder 9 konfiguriert wird, und einen dritten Schritt, in welchem der Feldgerätetyp eines angeschlossenen Feldgerätes 5 selbsttätig verifiziert wird.

Die vorgeschlagene Ein-/Ausgabe-Einheit 4 ermöglicht die vorgeschlagene vorteilhafte, im wesentlichen selbsttätig ausgeführte Inbetriebnahme, welche mit relativ wenig zeitlichem Aufwand praktisch ohne Spezialkenntnisse durchführbar ist.

Es versteht sich von selbst, dass die Testphase - oder Teile davon - auch nach der Inbetriebnahme bei Bedarf selbsttätig durchführbar sind. Dadurch können Störungen an der Anlage frühzeitig erkannt werden.

## Patentansprüche

1. Verfahren zur selbsttätigen Inbetriebnahme einer Einrichtung zur Steuerung und/oder Regelung von Prozessgrössen, mit über ein Kommunikationsmittel (1) bedienbaren Ein-/Ausgabemodulen (7; 8; 9) für Feldgeräte (5), wobei ein Ein-/Ausgabemodul (7; 8; 9) Mittel (21) zum Speichern seiner Funktionalität und auch Mittel (22, 31, 32, 34) zur Zuordnung und Verifikation des Feldgerätetyps eines am Ein-/Ausgabemodul (7; 8; 9) angeschlossenen Feldgeräts (5) aufweist, mit wenigstens folgenden Verfahrensschritten:
- einem Schritt, in welchem dem Ein-/Ausgabemodul (7; 8; 9) eine Adresse oder ein Adressbereich zugeordnet wird,
- einen Schritt, in welchem die Funktionalität des Ein-/Ausgabemoduls (7; 8; 9) konfiguriert wird, und
- einen Schritt, in welchem der Feldgerätetyp eines angeschlossenen Feldgerätes (5) selbsttätig verifiziert wird.

2. Verfahren nach einen vorangehenden Anspruch, **dadurch gekennzeichnet, dass** ein vom angeschlossenen Feldgerät (5) bestimmtes elektrisches Signal (u) durch das Ein-/Ausgabemodul (7; 8; 9) gemessen und ausgewertet wird.

3. Verfahren nach einem vorangehenden Anspruch, **dadurch gekennzeichnet, dass** eine Impedanz (Z) des angeschlossenen Feldgerätes durch das Ein-/Ausgabemodul (7; 8; 9) gemessen wird.

4. Verfahren nach einem vorangehenden Anspruch, **dadurch gekennzeichnet, dass** am Feldgerät gemessene Signale (u; Z) durch Mittel des Ein-/Ausgabemoduls (7; 8; 9) mit Sollwerten verglichen werden und das Resultat des Vergleichs selbsttätig ausgewertet wird.

5. Verfahren nach einem vorangehenden Anspruch, **dadurch gekennzeichnet, dass** ein Zustand des Ein-/Ausgabemoduls (7; 8; 9) protokolliert wird.

6. Verfahren nach einem vorangehenden Anspruch, **dadurch gekennzeichnet, dass** ein Zustand des angeschlossenen Feldgeräts (5) protokolliert wird.

7. Verfahren nach einem vorangehenden Anspruch, **dadurch gekennzeichnet, dass** der Feldgerätetyp eines angeschlossenen Feldgerätes (5) aus einer Klasse mit wenigstens den Typen "Sensor mit elektrischer Signalquelle", "Sensor ohne elektrische Signalquelle", "Stellglied mit Rückmeldung" und "Stellglied ohne Rückmeldung" ausgewählt und vom Ein-/Ausgabemodul (7; 8; 9) verifiziert wird.

8. Einrichtung zur Durchführung eines Verfahrens nach einem der Ansprüche 1 bis 7, mit über ein Kommunikationsmittel (1) bedienbaren Ein-/Ausgabemodulen (7; 8; 9) für Feldgeräte, wobei ein Ein-/Ausgabemodul (7; 8; 9) Mittel (21) zum Speichern seiner Funktionalität und auch Mittel (22.A; 22.B; 22.C) zur Zuordnung und Verifikation des Feldgerätetyps eines am Ein-/Ausgabemodul (7; 8; 9) angeschlossenen Feldgeräts (5) aufweist, **gekennzeichnet durch**
- Mittel (20, 30, 31, 10, 16), **durch** welche dem Ein-/Ausgabemodul (7; 8; 9) eine Adresse oder ein Adressbereich zuteilbar ist,
- Mittel (21, 31), **durch** welche die Funktionalität des Ein-/Ausgabemoduls (7; 8; 9) konfigurierbar ist, und
- Mittel (34, 32), **durch** welche der Feldgerätetyp des angeschlossenen Feldgerätes (5) selbsttätig verifizierbar ist.

9. Einrichtung nach Anspruch 8, **dadurch gekennzeichnet, dass** das Kommunikationsmittel (1) zur Bedienung von Ein-/Ausgabemodulen (7; 8; 9) für Feldgeräte (1) ein Feldbus ist.

10. Einrichtung nach Anspruch 8, **dadurch gekennzeichnet, dass** das Kommunikationsmittel zur Bedienung von Ein-/Ausgabemodulen (7; 8; 9) für Feldgeräte (1) drahtlose Kommunikationskanäle umfasst.

11. Einrichtung nach einem der Ansprüche 8 bis 10,
**dadurch gekennzeichnet, dass** Ein-/Ausgabemodule (7; 8; 9) über ein Bussystem (6) miteinander verbunden sind, wobei das Bussystem (6) über ein Basismodul (7) mit dem Kommunikationsmittel (1) verbunden ist.

12. Einrichtung nach Anspruch 11,
**dadurch gekennzeichnet, dass** das Bussystem (6) Mittel zur Speisung des Ein-/Ausgabemoduls (7; 8; 9) aufweist.

13. Einrichtung nach Anspruch 12,
**dadurch gekennzeichnet, dass** das Ein-/Ausgabemodul (7; 8; 9) Mittel (44) zur Speisung des am Ein-/Ausgabemodul (7; 8; 9) angeschlossenen Feldgerätes (5) aufweist, wobei die Mittel (44) ihrerseits durch das Bussystem (6) speisbar sind.

14. Einrichtung nach einem der vorangehenden Ansprüche 8 bis 13,
**dadurch gekennzeichnet, dass** eine Gruppe von Feldgeräten (5.3, 5.4, 5.5) durch ein Ein-/Ausgabemodul (7; 8; 9) bedienbar ist.

15. Einrichtung nach einem der vorangehenden Ansprüche 8 bis 14,
**dadurch gekennzeichnet, dass** die Adresse des Feldgerätes (5) eine vom Basismodul (7) und/oder Ein-/Ausgabemodul (7; 8; 9) abhängige Komponente (KB; KE) und eine vom Feldgerät (7) abhängige Komponente (KO) aufweist.

16. Einrichtung nach einem der vorangehenden Ansprüche 8 bis 15,
**dadurch gekennzeichnet, dass** das Ein-/Ausgabemodul (7; 8; 9) pro anschliessbares Feldgerät (5) eine Anschlussstelle (A; B; C) aufweist, wobei die Anschlussstelle wenigstens zwei Anschlussklemmen (40, 41 42) für das Feldgerät (5) aufweist.

17. Einrichtung nach einem der vorangehenden Ansprüche 8 bis 16,
**dadurch gekennzeichnet, dass** das Ein-/Ausgabemodul (7; 8; 9) durch funktionale Mittel (34) derart ausgestaltet ist, dass die Erkennung oder Verifizierung und die Bedienung des Feldgerätes (5) durch das Ein-/Ausgabemodul (7; 8; 9) auch dann sichergestellt ist, wenn Anschlusspunkte des Feldgerätes (5) an beliebigen Anschlussklemmen (40, 41, 42) einer Anschlussstelle (A; B; C) angeschlossen werden.

18. Einrichtung nach einem der vorangehenden Ansprüche 8 bis 17,
**dadurch gekennzeichnet, dass** die Anschlussklemmen (40, 41, 42) als Federklemmen ausgeführt sind.

19. Einrichtung nach einem der vorangehenden Ansprüche 8 bis 18,
**dadurch gekennzeichnet, dass** eine Raumklimagrösse eines Gebäudes durch ein Feldgerät (5) messbar oder veränderbar ist.

## Claims

1. A method of automatically bringing into operation an apparatus for controlling and/or regulating process parameters, comprising input/output modules (7; 8; 9), which are operable by way of a communication means (1), for field devices (5), wherein an input/output module (7; 8; 9) has means (21) for storage of its functionality and also means (22, 31, 32, 34) for association and verification of the field device type of a field device (5) connected to the input/output module (7; 8; 9), comprising at least the following method steps:
- a step in which an address or an address region is associated with the input/output module (7; 8; 9),
- a step in which the functionality of the input/output module (7; 8; 9) is configured, and
- a step in which the field device type of a connected field device (5) is automatically verified.

2. A method according to a preceding claim **characterised in that** an electrical signal (u) determined by the connected field device (5) is measured by the input/output module (7; 8; 9) and evaluated.

3. A method according to a preceding claim **characterised in that** an impedance (Z) of the connected field device is measured by the input/output module (7; 8; 9).

4. A method according to a preceding claim **characterised in that** signals (u; Z) measured at the field device are compared by means of the input/output module (7; 8; 9) to reference values and the result of the comparison is automatically evaluated.

5. A method according to a preceding claim **characterised in that** a state of the input/output module (7; 8; 9) is protocolled.

6. A method according to a preceding claim **characterised in that** a state of the connected field device (5) is protocolled.

7. A method according to a preceding claim **characterised in that** the field device type of a connected field device (5) is selected from the class with at least the types "sensor with electrical signal source", "sensor without electrical signal source", "control member with feedback" and "control member without feedback" and is verified by the input/output module (7; 8; 9).

8. Apparatus for carrying out a method according to one of claims 1 to 7 comprising input/output modules (7; 8; 9), which are operable by way of a communication means (1), for field devices (5), wherein an input/output module (7; 8; 9) has means (21) for storage of its functionality and also means (22, 31, 32, 34) for association and verification of the field device type of a field device (5) connected to the input/output module (7; 8; 9) **characterised by**
- means (20, 30, 31, 10, 16) by which an address or an address region can be allocated to the input/output module (7; 8; 9),
- means (21, 31) by which the functionality of the input/output module (7; 8; 9) can be configured, and
- means (34, 32) by which the field device type of the connected field device (5) is automatically verifiable.

9. Apparatus according to claim 8 **characterised in that** the communication means (1) for the operation of input/output modules (7; 8; 9) for field devices (1) is a field bus.

10. Apparatus according to claim 8 **characterised in that** the communication means for the operation of input/output modules (7; 8; 9) for field devices (1) includes wireless communication channels.

11. Apparatus according to one of claims 8 to 10 **characterised in that** input/output modules (7; 8; 9) are connected together by way of a bus system (6), wherein the bus system (6) is connected by way of a base module (7) to the communication means (1).

12. Apparatus according to claim 11 **characterised in that** the bus system (6) has means for the feed of the input/output module (7; 8; 9).

13. Apparatus according to claim 12 **characterised in that** the input/output module (7; 8; 9) has means (44) for the feed of the field device (5) connected to the input/output module (7; 8; 9), wherein the means (44) in turn can be fed by the bus system (6).

14. Apparatus according to one of preceding claims 8 to 13 **characterised in that** a group of field devices (5.3, 5.4, 5.5) can be operated by an input/output module (7; 8; 9).

15. Apparatus according to one of preceding claims 8 to 14 **characterised in that** the address of the field device (5) has a component (KB; KE) which is dependent on the base module (7) and/or input/output module (7; 8; 9) and a component (KO) which is dependent on the field device (7).

16. Apparatus according to one of preceding claims 8 to 15 **characterised in that** the input/output module (7; 8; 9) has a connecting location (A; B; C) for each connectable field device (5), wherein the connecting location has at least two connecting terminals (40, 41, 42) for the field device (5).

17. Apparatus according to one of preceding claims 8 to 16 **characterised in that** the input/output module (7; 8; 9) is so set up by functional means (34) that recognition or verification and operation of the field device (5) by the input/output module (7; 8; 9) is ensured even when connecting points of the field device (5) are connected to any connecting terminals (40, 41, 42) of a connecting location (A; B; C).

18. Apparatus according to one of preceding claims 8 to 17 **characterised in that** the connecting terminals (40, 41, 42) are in the form of spring terminals.

19. Apparatus according to one of preceding claims 8 to 18 **characterised in that** a room air conditioning parameter of a building can be measured or modified by a field device (5).

## Revendications

1. Procédé pour la mise en service automatique d'une installation pour la commande et/ou la régulation de valeurs de processus comprenant des modules d'entrée et de sortie (7 ; 8 ; 9) pour des appareils de terrain (5) et actionnables au travers d'un moyen de communication (1), dans laquelle un module d'entrée et de sortie (7 ; 8 ; 9) présente un moyen (21) pour la mise en mémoire de sa fonctionnalité et présente également des moyens (22, 31, 32, 34) pour l'attribution et la vérification du type d'un appareil de terrain (5) raccordé au module d'entrée et de sortie (7 ; 8 ; 9), comprenant au moins les étapes de procédé suivantes :
- une étape durant laquelle il est attribué une adresse ou un domaine d'adresse au module d'entrée et de sortie (7 ; 8 ; 9),
- une étape durant laquelle la fonctionnalité du module d'entrée et de sortie (7 ; 8 ; 9) est configurée, et
- une étape durant laquelle le type de l'appareil de terrain (5) raccordé est vérifié automatiquement.

2. Procédé selon l'une quelconque des revendications précédentes, **caractérisé en ce qu'**un signal électrique déterminé (u) émis par l'appareil de terrain (5) raccordé est mesuré et analysé par le module d'entrée et de sortie (7 ; 8 ; 9).

3. Procédé selon l'une quelconque des revendications précédentes, **caractérisé en ce qu'**une impédance (Z) de l'appareil de terrain (5) raccordé est mesurée par le module d'entrée et de sortie (7 ; 8 ; 9).

4. Procédé selon l'une quelconque des revendications précédentes, **caractérisé en ce que** les signaux (u ; Z) mesurés au niveau de l'appareil de terrain (5) sont comparés aux valeurs de consigne par les moyens du module d'entrée et de sortie (7 ; 8 ; 9) et le résultat de la comparaison est analysé automatiquement.

5. Procédé selon l'une quelconque des revendications précédentes, **caractérisé en ce qu'**un état du module d'entrée et de sortie (7 ; 8 ; 9) est enregistré.

6. Procédé selon l'une quelconque des revendications précédentes, **caractérisé en ce qu'**un état de l'appareil de terrain (5) raccordé est enregistré.

7. Procédé selon l'une quelconque des revendications précédentes, **caractérisé en ce que** le type de l'appareil de terrain (5) raccordé est choisi parmi une classe comprenant au moins les types « capteur à source de signal électrique », « capteur sans source de signal électrique », « organe de réglage à information d'exécution » et « organe de réglage sans information d'exécution » et est vérifié par le module d'entrée et de sortie (7 ; 8 ; 9).

8. Installation pour la mise en oeuvre d'un procédé selon l'une quelconque des revendications 1 à 7, comprenant des modules d'entrée et de sortie (7 ; 8 ; 9) pour des appareils de terrain actionnables au travers d'un moyen de communication (1), dans laquelle un module d'entrée et de sortie (7 ; 8 ; 9) présente un moyen (21) pour la mise en mémoire de sa fonctionnalité et présente également des moyens (22.A, 22.B, 22.C) pour l'attribution et la vérification du type d'un appareil de terrain (5) raccordé au module d'entrée et de sortie (7 ; 8 ; 9), **caractérisée par** :
- des moyens (20, 30, 31, 10, 16) grâce auxquels il peut être attribué une adresse ou un domaine d'adresse au module d'entrée et de sortie (7 ; 8 ; 9),
- des moyens (21, 31) grâce auxquels la fonctionnalité du module d'entrée et de sortie (7 ; 8 ; 9) configurée, et
- des moyens (34, 32) grâce auxquels le type de l'appareil de terrain (5) raccordé peut être vérifié automatiquement.

9. Installation selon la revendication 8, **caractérisée en ce que** le moyen de communication (1) servant à faire fonctionner des modules d'entrée et de sortie (7 ; 8 ; 9) pour des appareils de terrain (1) est un bus de terrain.

10. Installation selon la revendication 8, **caractérisée en ce que** le moyen de communication (1) servant à faire fonctionner des modules d'entrée et de sortie (7 ; 8 ; 9) pour des appareils de terrain (1) comprend des canaux de communication sans fil.

11. Installation selon l'une quelconque des revendications 8 à 10, **caractérisée en ce que** les modules d'entrée et de sortie (7 ; 8 ; 9) sont raccordés l'un à l'autre au travers d'un système de bus (6), où le système de bus (6) est relié au moyen de communication (1) au travers d'un module de base (7).

12. Installation selon la revendication 11, **caractérisée en ce que** le système de bus (6) présente des moyens pour l'alimentation du module d'entrée et de sortie (7 ; 8 ; 9).

13. Installation selon la revendication 12, **caractérisée en ce que** le module d'entrée et de sortie (7 ; 8 ; 9) présente des moyens (44) pour l'alimentation de l'appareil de terrain (5) raccordé au module d'entrée et de sortie (7 ; 8 ; 9), où les moyens (44) peuvent eux-mêmes être alimentés par le système de bus (6).

14. Installation selon l'une quelconque des revendications 8 à 13, **caractérisée en ce qu'**un groupe d'appareils de terrain (5.3, 5.4, 5.5) peut être actionné au travers d'un module d'entrée et de sortie (7 ; 8 ; 9).

15. Installation selon l'une quelconque des revendications 8 à 14, **caractérisée en ce que** l'adresse de l'appareil de terrain (5) présente une composante (KB ; KE) dépendant du module de base (7) et/ou du module d'entrée et de sortie (7 ; 8 ; 9) et une composante (KO) dépendant de l'appareil de terrain (7).

16. Installation selon l'une quelconque des revendications 8 à 15, **caractérisée en ce que** le module d'entrée et de sortie (7 ; 8 ; 9) présente, pour chaque appareil de terrain (5) raccordable, un point de connexion (A ; B ; C), lesdits points de connexion présentant au moins deux bornes de connexion (40, 41, 42) pour l'appareil de terrain (5).

17. Installation selon l'une quelconque des revendications 8 à 16, **caractérisée en ce que** le module d'entrée et de sortie (7 ; 8 ; 9) est agencé, à l'aide de moyens fonctionnels (34), de telle sorte que la reconnaissance ou la vérification et l'utilisation de l'appareil de terrain (5) par le module d'entrée et de sortie (7 ; 8 ; 9) peuvent être également garanties lorsque les points de raccordement de l'appareil de terrain (5) sont raccordés à n'importe quelle borne de connexion (40, 41, 42) d'un point de connexion (A ; B ; C).

18. Installation selon l'une quelconque des revendications 8 à 17, **caractérisée en ce que** les bornes de connexion (40, 41, 42) sont conçues sous forme de bornes à ressort.

19. Installation selon l'une quelconque des revendications 8 à 18, **caractérisée en ce qu'**une valeur de climat ambiant d'un bâtiment peut être mesurée ou modifiée au moyen d'un appareil de terrain (5).
